# EUROPEAN PATENT SPECIFICATION

(11) **EP 2 392 606 B1**
(45) Date of publication and mention of the grant of the patent: **28.03.2018**
(21) Application number: 09809270.3
(22) Date of filing: 02.09.2009
(51) Int. Cl.: C08G 63/87, C08G 63/08, C08G 63/82, C08G 63/81, B01J 31/04, B01J 31/40

(54) **PREPARATION METHOD OF POLYLACTIC ACID BY CATALYSIS OF CARBENE DERIVATIVES**
VERFAHREN FÜR DIE HERSTELLUNG VON POLYMILCHSÄURE MITTELS KATALYSE VON CARBENDERIVATEN
PROCÉDÉ DE PRÉPARATION DE L'ACIDE POLYLACTIQUE PAR CATALYSE DE DÉRIVÉS DU CARBÈNE

(30) Priority: 01.09.2008 CN 200810146617
(43) Date of publication of application: 07.12.2011
(73) Proprietor: Nanjing University of Technology, Gulou Nanjing, Jiangsu 210009 (CN)
(72) Inventor: LI, Zhenjiang, Nanjing Jiangsu 210009 (CN); KAN, Suli, Nanjing Jiangsu 210009 (CN); WANG, Yanqin, Nanjing Jiangsu 210009 (CN); GUO, Chang, Nanjing Jiangsu 210009 (CN); SONG, Ping, Nanjing Jiangsu 210009 (CN); SHENG, Shichuan, Nanjing Jiangsu 210009 (CN); OUYANG, Pingkai, Nanjing Jiangsu 210009 (CN)
(74) Representative: Kramer Barske Schmidtchen Patentanwälte PartG mbB
(86) International application number: PCT/CN2009/073677
(87) International publication number: WO 2010/022685

(56) References cited:
- WO-A1-2008/087263
- CN-A- 1 687 176
- CN-A- 1 706 878
- JP-A- 2006 137 733
- US-A1- 2008 051 608
- DOVE A P ET AL: "N-Heterocyclic carbenes: Effective organic catalysts for living polymerization", POLYMER, ELSEVIER SCIENCE PUBLISHERS B.V, GB, vol. 47, no. 11, 17 May 2006 (2006-05-17), pages 4018-4025, XP028061046, ISSN: 0032-3861, DOI: 10.1016/J.POLYMER.2006.02.037 [retrieved on 2006-05-17]
- OLIVIER COULEMBIER ET AL: "Alcohol Adducts of N -Heterocyclic Carbenes: Latent Catalysts for the Thermally-Controlled Living Polymerization of Cyclic Esters", MACROMOLECULES, vol. 39, no. 17, 1 August 2006 (2006-08-01), pages 5617-5628, XP055065316, ISSN: 0024-9297, DOI: 10.1021/ma0611366
- ANNE GROTEVENDT ET AL.: 'Efficient catalysts for telomerization of butadiene with amines.' TETRAHEDRON LETTERS. vol. 48, no. 52, October 2007, pages 9203 - 9207, XP022368229
- ADRIANA TUDOSE ET AL.: 'Imidazol(in)ium-2-carboxylates as N-heterocyclic carbene precursors in ruthenium-arene catalysts for olefin metathesis and cyclopropanation.' JOURNAL OF ORGANOMETALLIC CHEMISTRY. vol. 691, no. 24-25, August 2006, pages 5356 - 5365, XP025188897

## Description

### Technical Field

This invention is in the field of polymeric material, specifically involving the use of carbene derivatives - the CO₂ adducts of carbenes - as catalysts in preparing polylactic acid.

### Background Technology

Polylactic acid, also known as polylactide, as a completely biodegradable material that derives from renewable resources of agricultural crops, has attracted world-wide attention and research efforts.

Significant research efforts have been devoted to explore methods of preparing polylactic acid, among them the ring-opening lactide polymerization is a method more heavily studied. Regarding the catalysts used in the lactide ring-opening reactions, in the earlier days metal-containing catalysts were used, as disclosed in CN1814644, CN1814645, and US5235031, US5357034, US4045418, US4057537, and US3736646. However, these methods require relatively long reaction time. Furthermore, it is very difficult to remove residue metal from the polylactic acid prepared using these methods. Later, Connor, etc. (Fredrik Nederberg, etc., Angewandte Chemie International Edition, 2001, 40, 2712-2715) proposed to use only organic catalysts to carry out ring-opening polymerization, and tried tertiary amine as the catalyst. Subsequently, organic phosphine, bifunctional amine thiourea, guanidine, amidine type, and N-heterocyclic carbene catalysts emerged, among which *N*-heterocyclic carbene catalysts become the most actively studied class of organic catalysts.

Active intermediates of *N*-heterocyclic carbene catalysts are their corresponding *N*-heterocyclic carbenes, which are strongly nucleophilic. During the catalytic ring-opening polymerization, the carbenes attack the lactide monomer, causing the opening of lactide's ring structure, and in the presence of an initiator induce polymerization to produce polylactic acid. However, the *N-*heterocyclic carbene is very active, and sensitive to air and water. It can only exist for a few seconds in the air. It is difficult to use it as the catalyst for the polymerization. Therefore, it is proposed to use *N*-heterocyclic carbene precursors or *N*-heterocyclic adducts, which can be activated to catalyze polymerization reaction.

For example, Connor, et al. (Eric F. Connor, et al.. Journal of the American Chemical Society, 2002, 124, 914-915; Gregory W. Nyce, etc., Journal of the American Chemical Society, 2003, 125, 3046-3056) used imidazolium salt as the catalyst precursor, producing the corresponding N-heterocyclic carbenes in a strong base - potassium tert-butoxide, and then added the lactide monomer in the same system to carry out direct catalytic polymerization that produced polylactic acid. Disadvantages of this approach are: Since *N*-heterocyclic carbenes are unstable and difficult to separate, when *N*-heterocyclic carbene formation and lactide ring-opening polymerization occur in the same system, the system's strong base will not only promote the formation of *N-*heterocyclic carbenes, but also cause ring-opening of cyclic compounds or the degradation of the polymer, consequently making the polymerization complex and difficult to control. The residual alkali and salt will have adverse effects on the property and appearance of the polymer and its material.

To overcome the above drawbacks, stable *N*-heterocyclic carbene complexes, such as *N-*heterocyclic carbenes with small molecules H-CCl₃, H-C₆F₅, H-OR, etc., have been prepared and used as catalysts for lactide ring-opening polymerization. By controlling the polymerization condition, H-CCl₃, H-C₆F₅, H-OR and other small molecules can be removed so that N-heterocyclic carbenes are released, facilitating polymerization reaction. However, residue amount of the small molecule to be removed still exists in the reaction system. On the one hand, they interfere with the polymerization reaction, and on the other hand, they introduce impurities to the reaction system and the produced polylactic acid. Furthermore, the above mentioned polymerization is limited to be carried out in dilute solution. Therefore, this reaction is restricted in terms of large scale applications.

To overcome these deficiencies, it is necessary to introduce catalysts that are structurally stable, easy to use, can readily control polymerization process, safe, and leave no residue. Synthesis of CO₂ adducts of carbenes have been reported in recent years (J. D. Holbrey, et al., Chemical Communications, 2003, 28-29; H. A. Duong, et al., Chemical Communications, 2004, 112-113). Voutchkova (A. M. Voutchkova, et al., Journal of the American Chemical Society, 2005, 127, 17624 - 17625) reported a method for preparing a carbene-metal complex that uses disubstituted carbene CO₂ adducts as the transfer reagent. That is to take advantage of the stability of the CO₂ adducts of carbenes and its ability to release CO₂ to prepare the complex of carbene and metal rhodium, ruthenium, and lead. Subsequently, Tudose et al. used the carbene metal complex as the catalyst for Suzuki-Miyaura coupling reaction, olefin metathesis, and cyclopropanation reactions (A. Tudose et al., Tetrahedron Letters, 2006, 47, 8529-8533; A. Tudose et al., Journal of Organometallic Chemistry, 2006, 691, 5356-5365). However, currently the literature only discloses using *N*-heterocyclic carbenes as the transfer reagent in the preparation of carbene metal complexes. There is no report as to using CO₂ adducts of carbenes as a catalyst, much less using the adducts as the catalyst for ring-opening polymerization of lactide.

A. P. Dove et al., Polymer 47 (2006), 4018-4025, disclose a study on N-heterocyclic carbenes as effective organic catalysts for living polymerization. O. Coulembier et al., Macromolecules 2006, 39, 5617-5628, disclose a study on alcohol adducts of N-heterocyclic carbenes as latent catalysts for the thermally controlled living polymerization of cyclic esters. US 2008/0051608 A1 discloses a method for the preparation of alpha-hydroxy ketones via a carbene-catalyzed Umpolung-reaction of aldehydes.

### Summary

The technical problem to be addressed by the invention disclosed herein is to provide a method that uses a new type of carbene complex as the catalyst in the preparation of polylactic acid.

To solve the above problem, the disclosure of this invention is as follows:
(1) new carbene derivatives - the temperature of decarboxylation at the second position (CO₂ removal) varies in response to different substituents on the ring of the CO₂ adducts of *N-*heterocyclic carbenes. Consequently, one can design carbene derivatives according to the temperature of *in situ* generation of carbene in the polymerization system, therefore controlling the decarboxylation temperature, and control the polymerization process by controlling the temperature;
(2) carbon dioxide adducts of carbenes are heated and experience decarboxylation in the polymerization conditions to form the corresponding *N*-heterocyclic carbenes and CO₂ is released from the reaction system. Other than the carbenes, there is no other compound in the system;
(3) in the presence of alcohol initiators, *N*-heterocyclic carbenes catalyze the lactide ring-opening polymerization to obtain polylactic acid.

Through research this invention also discovered that different substituents on the CO₂ adducts of heterocyclic carbenes will affect the decarboxylation temperature on the 2-position of heterocyclic ring. While the appropriate decarboxylation temperature and its range are determined according to the property of the polymer and the process condition of the polymerization equipment, all CO₂ adducts of heterocyclic carbenes have the appropriate decarboxylation temperature for lactide ring-opening polymerization. To ensure that the decarboxylation of CO₂ adducts of carbenes occurs in the same temperature range of the ring-opening polymerization, so that to produce active catalyst to promote the catalytic reaction, thermal gravimetric analysis was conducted on CO₂ adducts of carbenes having different substituents on the structure of carbenes. The temperature and rate of decarboxylation of CO₂ adducts of carbenes of various structure were obtained. Among them, a group of suitable catalysts were chosen so that the decarboxylation temperature and the reaction temperature of lactide ring-opening polymerization can properly match. Under the suitable reaction temperature the catalytic ring-opening polymerization can be effectively carried out. Therefore, through controlling its reaction temperature, lactide ring-opening polymerization catalyzed by CO₂ adducts of carbenes becomes controllable.

The terminal structure and the molecular weight can also be controlled. For example, adding an reagent having active hydrogen (R-O-H) as an initiator in the ring-opening polymerization reaction can achieve a narrow molecular weight distribution. The terminal structures of the obtained polylactic acid are R-O- and -OH, respectively. While the ratio of the lactide monomer and initiator determines the target molecular weight of the polylactic acid, when there is an initiator, *N*-heterocyclic carbene catalyzed ring-opening polymerization of lactide is a living polymerization, resulting in a polylactic acid with a relatively narrow molecular weight distribution.

The technical solution in this invention is as follows:
A method of making polylactic acid using CO₂ adducts of carbenes, wherein the adducts have a structure represented by formula (I): 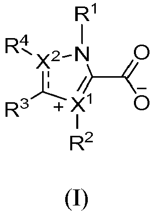 wherein the dotted line indicates an optional double bond; X¹ is chosen from S and N; X² is chosen from C and N; R¹ and R² can be the same or different and are chosen from
   hydrogen,
   alkyl groups having 1 to 10 carbon atoms,
   alkyl groups having 1 to 10 carbon atoms and also having one or more substituents chosen from a halogen atom, a hydroxyl group, a phenyl group, and a cyano group,
   cycloalkyl groups having 3 to 6 carbon atoms,
   a halogen atom,
   an adamantyl group,
   a phenyl group, and
   a phenyl group having one or more substituents chosen from a halogen atom, a hydroxyl group, an alkyl group, and a cyano group;
   R³ and R⁴ can be the same or different and are chosen from
   hydrogen,
   a halogen atom,
   a cyano group,
   a hydroxyl group,
   alkyl groups having 1 to 4 carbon atoms,
   alkyl groups having 1 to 4 carbon atoms and also having one or more substituents chosen from a halogen atom, a hydroxyl group, a phenyl group, and a cyano group,
   a phenyl group, and
   a substituted phenyl group.

Alternatively, R³ and R⁴ are connected to form cycloalkyl or cycloalkenyl groups having 3 to 8 carbon atoms; or R³ and R⁴ are connected to form a benzene ring; or R² and R³ are connected to form 5- or 6-*N*-heterocyclic compounds that do not have any substituent.

Specific structures of CO₂ adducts of carbenes of formula (I) can be represented as in formula (II), formula (III), formula (IV), or formula (V):

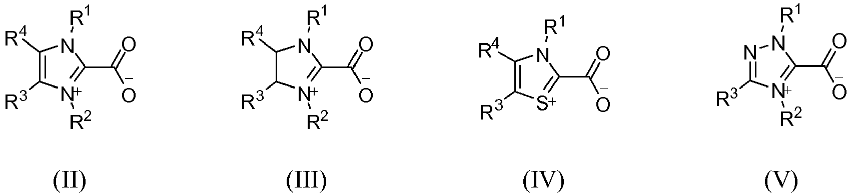

In formula (II), R¹ and R² can be the same or different and are chosen from
hydrogen,
alkyl groups having 1 to 10 carbon atoms,
alkyl groups having 1 to 10 carbon atoms and also having one or more substituents chosen from a halogen atom, a hydroxyl group, a phenyl group, and a cyano group,
cycloalkyl groups having 3 to 6 carbon atoms,
a halogen atom,
an adamantyl group,
a phenyl group, and
a phenyl group having one or more substituents chosen from a halogen atom, a hydroxyl group, an alkyl group, and a cyano group;
R³ and R⁴ can be the same or different and are chosen from
hydrogen,
a halogen atom,
a cyano group,
a hydroxyl group,
alkyl groups having 1 to 4 carbon atoms,
alkyl groups having 1 to 4 carbon atoms and also having one or more substituents chosen from a halogen atom, a hydroxyl group, a phenyl group, and a cyano group,
a phenyl group, and
a substituted phenyl group.

Alternatively, R³ and R⁴ are connected to form cycloalkenyl groups having 3 to 8 carbon atoms; or R³ and R⁴ are connected to form a benzene ring.

In formula (III), R¹ and R² can be the same or different and are chosen from
hydrogen,
alkyl groups having 1 to 10 carbon atoms,
alkyl groups having 1 to 10 carbon atoms and also having one or more substituents chosen from a halogen atom, a hydroxyl group, a phenyl group, and a cyano group,
cycloalkyl groups having 3 to 6 carbon atoms,
a halogen atom,
an adamantyl group,
a phenyl group, and
a phenyl group having one or more substituents chosen from a halogen atom, a hydroxyl group, an alkyl group, and a cyano group;
R³ and R⁴ can be the same or different and are chosen from
hydrogen,
a halogen atom,
a cyano group,
a hydroxyl group,
alkyl groups having 1 to 4 carbon atoms,
alkyl groups having 1 to 4 carbon atoms and also having one or more substituents chosen from a halogen atom, a hydroxyl group, a phenyl group, and a cyano group,
a phenyl group, and
a substituted phenyl group.

Alternatively, R³ and R⁴ are connected to form cycloalkyl groups having 3 to 8 carbon atoms.

In formula (IV), R¹ is chosen from
hydrogen,
alkyl groups having 1 to 10 carbon atoms,
alkyl groups having 1 to 10 carbon atoms and also having one or more substituents chosen from a halogen atom, a hydroxyl group, a phenyl group, and a cyano group,
cycloalkyl groups having 3 to 6 carbon atoms,
a halogen atom,
an adamantyl group,
a phenyl group, and
a phenyl group having one or more substituents chosen from a halogen atom, a hydroxyl group, an alkyl group, and a cyano group;
R³ and R⁴ can be the same or different and are chosen from
hydrogen,
a halogen atom,
a cyano group,
a hydroxyl group,
alkyl groups having 1 to 4 carbon atoms,
alkyl groups having 1 to 4 carbon atoms and also having one or more substituents chosen from a halogen atom, a hydroxyl group, a phenyl group, and a cyano group,
a phenyl group, and
a substituted phenyl group.

Alternatively, R³ and R⁴ are connected to form cycloalkenyl groups having 3 to 8 carbon atoms; or R³ and R⁴ are connected to form a benzene ring.

In formula (V), R¹ and R² can be the same or different and are chosen from
hydrogen,
alkyl groups having 1 to 10 carbon atoms,
alkyl groups having 1 to 10 carbon atoms and also having one or more substituents chosen from a halogen atom, a hydroxyl group, a phenyl group, and a cyano group,
cycloalkyl groups having 3 to 6 carbon atoms,
a halogen atom,
an adamantyl group,
a phenyl group, and
a phenyl group having one or more substituents chosen from a halogen atom, a hydroxyl group, an alkyl group, and a cyano group;
R³ is chosen from
hydrogen,
a halogen atom,
a cyano group,
a hydroxyl group,
alkyl groups having 1 to 4 carbon atoms,
alkyl groups having 1 to 4 carbon atoms and also having one or more substituents chosen from a halogen atom, a hydroxyl group, a phenyl group, and a cyano group,
a phenyl group, and
a substituted phenyl group.

Alternatively, R² and R³ are connected to form 5- or 6-*N*-heterocyclics that do not have any substituent.

The above-described substituted phenyl group can have one, two, or three substituents. The substituents can be the same or different, chosen from alkyl groups having 1-5 carbon atoms, alkyl groups having 1-5 carbon atoms and having one or more substituents chosen from halogen atoms, hydroxyl, phenyl, and cyano group, halogen atom, hydroxyl, alkoxy, and cyano.

The above-described methods of making polylactic acid can be solution polymerization, specifically comprising mixing CO₂ adducts of carbenes, the initiator, and lactide monomer in an organic solvent according to a molar ratio of 1:0.2 to 5:2 to 10000, preferably of 1:0.5 to 3:100 to 500, more preferably of 1:0.5 to 2:100 to 300. The reaction temperature is -50 to 250 °C, preferably 50 °C to 180 °C, more preferably 60 °C to 150 °C. The reaction time ranges from 3 seconds to 120 hours, preferably 0.2 to 24 hours, more preferably 0.2 to 15 hours.

The above-described method of preparing polylactic acid can also be bulk polymerization, specifically comprising mixing CO₂ adducts of carbenes, the initiator, and lactide monomer according to a molar ratio of 1:0.2 to 5:2 to 10000, preferably of 1:0.5 to 3:100 to 500, more preferably of 1:0.5 to 2:100 to 300. The reaction temperature is -50 to 250 °C, preferably 50 °C to 180 °C, more preferably 60 °C to 150 °C. The reaction time ranges from 3 seconds to 120 hours, preferably 0.2 to 24 hours, more preferably 0.2 to 15 hours.

In the solution polymerization and bulk polymerization, the above-described initiator can be alcohol compounds, such as methanol, ethanol, propanol, isopropanol, butanol, tert-butyl alcohol, benzyl alcohol, phenethyl alcohol, ethylene glycol, diethylene glycol, pentaerythritol, preferably n-butanol, benzyl alcohol, and phenethyl alcohol. The above-described lactide can be L-lactide, D-lactide, meso-lactide, or racemic lactide, or a mixture of any proportion between L-lactide and D-lactide. The step to terminate the reaction is to add weak acid (such as formic acid, acetic acid, hydrochloric acid, etc.), oxygen, water, CS₂ or CO₂, preferably formic acid, acetic acid, water, or CS₂.

In solution polymerization, the organic solvent used can be cyclohexane, hexane, ethyl ether, acetone, cyclohexanone, dioxane, tetrahydrofuran, benzene, toluene, xylene, methylene chloride, chloroform, *N,N*-dimethylformamide, *N,N*-dimethylacetamide, or dimethyl sulfoxide, preferably acetone, tetrahydrofuran, toluene, xylene, methylene chloride, chloroform, more preferably tetrahydrofuran and toluene. The reaction can be carried out in an inert gas. The inert gas is preferably argon or nitrogen. The reaction product is preferred to be purified in an antisolvent, such as methanol, ethanol, or water.
In bulk polymerization, the reaction can be carried out in inert gas or under vacuum. The inert gas is preferably argon or nitrogen. The vacuum means that the pressure in the reactor is 4 to 20 mmHg. The reaction product is dissolved in a good solvent and then precipitated by adding an antisolvent, such as methanol, ethanol, or water. The good solvent can be dichloromethane, chloroform, toluene, benzene, acetone or tetrahydrofuran, preferably dichloromethane, chloroform, tetrahydrofuran.

The invention also provides the use of CO₂ adducts of carbenes in the preparation of catalysts used in polylactic acid preparation.

In the method of using carbene derivatives to catalyze polylactic acid preparation provided in this invention, CO₂ adducts of carbenes having different substituents, which are used as the catalyst, have different decarboxylation temperatures. Further, the rate of decarboxylation differs at different temperature. Therefore, one may select a CO₂ adduct of carbene that has a suitable decarboxylation temperature as the catalyst for ring-opening polymerization, so that to control the lactide ring-opening polymerization through controlling the decarboxylation temperature. The removed CO₂ is vented, leaving no pollutant in the polymerization system. This method is effective and environmentally friendly. CO₂ adducts of carbenes are structurally stable, can be stored under normal conditions, keeping their properties intact for a long period of time. They are also easy to use, without requiring operation under exacting reaction conditions. The catalytic reactivity is high in both a solution polymerization system and a bulk polymerization system.

### Description of drawings

Examples of this invention are described in detail with reference to the drawings in the following.
Figure 1: A TGA graph of a salt of 1,3-bis(2,6-diisopropyl-phenyl)imidazole-2-carboxylic acid;
Figure 2: A ¹H-NMR spectrum of polylactic acid prepared using a salt of 1,3-bis(2,6-diisopropylphenyl)imidazole-2-carboxylic acid as the catalyst;
Figure 3: A chromatogram of size-exclusion chromatography of polylactic acid prepared using a salt of 1,3-bis(2,6-diisopropyl-phenyl)imidazole-2-carboxylic acid as the catalyst.

### Examples

The following examples are used to further illustrate the present invention. These examples are for the purpose of illustration and in no way limit the invention. One of ordinary skill in the art would appreciate that these examples do not limit the present invention in any aspects, and that appropriate modification and adjustment of the parameters can be made without violating the essence of this invention and deviation from the scope of the present invention.

CO₂ adducts of carbenes used in the examples in this invention are shown in Table 1.

**Table 1: Carbon dioxide adducts of carbenes used in the examples**

| No. | Structure | No. | Structure | No. | Structure |
|---|---|---|---|---|---|
| A | 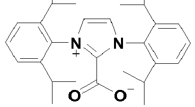 | B | 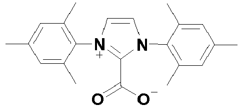 | c | 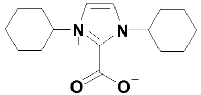 |
| D | 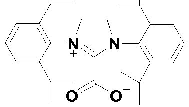 | E | 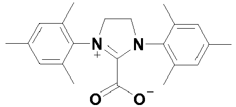 | F | 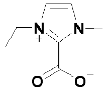 |
| G | 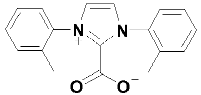 | H | 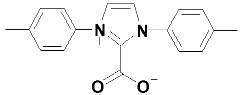 | I | 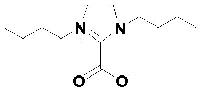 |
| J | 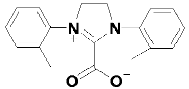 | K | 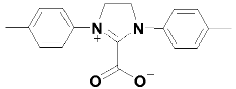 | L | 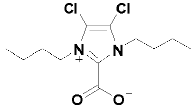 |
| M | 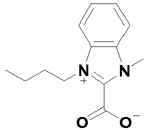 | N | 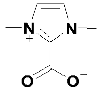 | O | 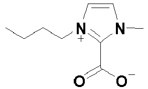 |
| P | 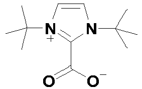 | Q | 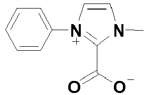 | R | 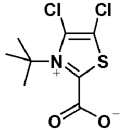 |
| S | 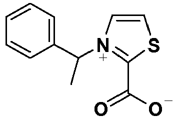 | T | 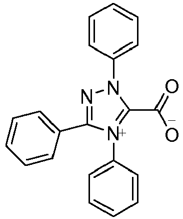 | | |

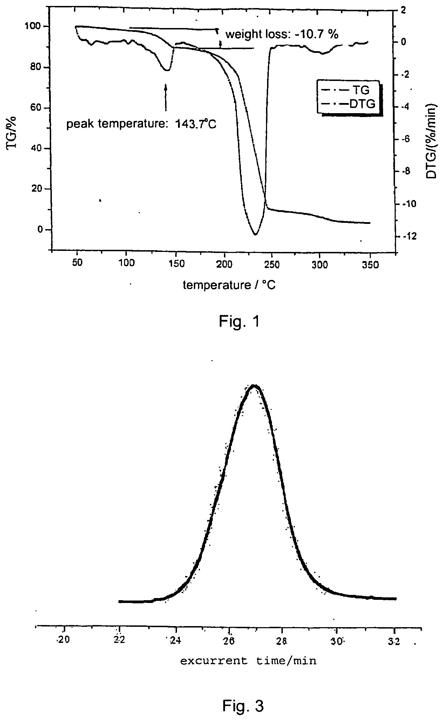

The range of decarboxylation temperature in this invention was obtained using TGA analysis. The equipment and test conditions were: TG/DTA (NETZSCH STA 449 C), N₂ protection, heating rate 5 °C/min, temperature range 50 to 350 °C. Using the salt of 1,3-bis(2,6-diisopropylphenyl)imidazole-2-carboxylic acid as an example, its TG/DTG graph is in Figure 1.

The reaction conversion is measured using ¹H-NMR. The equipment and test conditions were: NMR (Bruker DRX500), solvents were *d*-CHCl₃, *d*-DMSO or *d*-CH₃COCH₃. The average molecular weight of polylactic acid and the dispersion were determined using size-exclusion chromatography (SEC), the test conditions are: column temperature: 25 °C, solvent: THF (HPLC), flow rate: 1 mL/min, HPLC Pump: Waters 515, Detector: RI (Wyatt Optilab rEX), column: HR3, HR4, and HR5 Styragel connected in series, standard sample: polystyrene (PS) *M_{w}* = 900 to 1.74 × 10⁶ g/mol, PDI <1.1.

### Example 1:

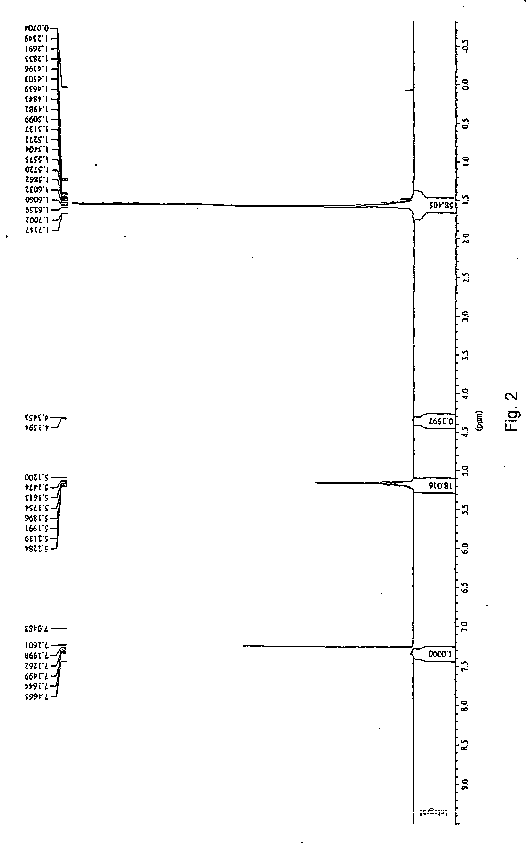

1,3-bis(2,6-diisopropyl-phenyl)imidazole-2-carboxylic acid salt (A) (29 mg, 75 µmol), benzyl alcohol (5.4 mg, 50 µmol), L-lactide (1.44 g, 10 mmol) were dissolved in 10 mL of xylene. The solution was heated under the protection of N₂ to 140 °C, and reacted for 30 minutes. The reaction was terminated by adding formic acid. The reaction solution was added into methanol. The precipitate was filtered and dried to a constant weight, obtaining 1.20 g of white solid. The conversion was 86 %. The number average molecular weight of the polylactic acid *Mₙ* was 18,460. The polydispersity index PDI was 1.05. The ¹H-NMR spectrum and SEC chromatogram of the obtained polylactic acid are shown in Figures 2 and 3, respectively.

### Example 2:

1,3-bis(o-methylphenyl)imidazoline-2-carboxylic acid salt (J) (73.54 mg, 250 µmol), benzyl alcohol (5.4 mg, 50 µmol), L-lactide (0.72 g, 12.5 mmol) were added into a reaction vessel and heated under the protection of Ar to 130 °C. The reaction in the molten mixture was carried out for 1 hour. The reaction was terminated by adding water. The reaction mixture was dissolved in chloroform and then added into ethanol. The precipitate was filtered and dried to a constant weight, obtaining 0.67 g of white solid. The conversion was 95 %. The number average molecular weight of the polylactic acid *Mₙ* was 32,780. The polydispersity index PDI was 1.16.

### Example 3:

The 1-butyl-3-methylimidazolium-2-carboxylic acid salt (O) (18.21 mg, 100 µmol), butanol (7.41 mg, 100 µmol), D-lactide (5.76 g, 40 mmol) were added into a reaction vessel. The reaction vessel was under vacuum at a pressure of 7 mmHg. The reaction was carried out at -50 °C for 60 hours. The reaction was terminated by adding hydrochloric acid. The reaction mixture was dissolved with dichloromethane, then added into ethanol. The precipitate was filtered and dried to a constant weight, obtaining 2.30 g of white solid. The conversion was 54 %. The number average molecular weight of the polylactic acid *Mₙ* was 24,850. The polydispersity index PDI was 1.19.

### Example 4:

1,3-bis(2,6-diisopropyl-phenyl)imidazoline-2-carboxylic acid salt (D) (32.6 g, 75 mmol), methanol (1.6 g, 50 mmol), L-lactide (21.6 g, 150 mmol) were added into the reaction vessel and dissolved using 500 mL of THF. The solution was heated under the protection of Ar to 40 °C, stirred and let react for 48 hours. The reaction was terminated by adding benzoic acid. The reaction mixture was condensed and added into methanol. The precipitate was filtered and dried to a constant weight to obtain 13.58 g of white solid. The conversion was 63 %. The number average molecular weight of the polylactic acid *Mₙ* was 432. The polydispersity index was PDI 1.00.

### Example 5:

1-phenyl-3-methylimidazolium-2-carboxylic acid salt (Q) (16.2 mg, 75 µmol), benzyl alcohol (10.8 mg, 100 µmol), D-lactide (2.88 g, 20 mmol) were added into a reaction vessel. The reaction vessel was under vacuum at a pressure of 7 mmHg. The reaction was carried out at 0 °C for 5 days. The reaction was terminated by adding water. The reaction mixture was dissolved in toluene. The solution was then added into ethanol. The precipitate was filtered and dried to a constant weight to obtain 1.3 g of white solid. The conversion was 49 %. The number average molecular weight of polylactic acid *Mₙ* was 18,750. The polydispersity index PDI was 1.08.

### Example 6:

1,3-dimethyl imidazole-2-carboxylic acid salt (N) (14.01 mg, 75 µmol), ethylene glycol (1.86 mg, 30 µmol), D, L-lactide (2.16 g, 15 mmol) were added into a reaction vessel. The mixture was heated under the protection of Ar to 96 °C. The reaction in the molten mixture was carried out for 2 hours. The reaction was terminated by adding CS₂. The reaction mixture was dissolved in chloroform. The solution was then added into methanol. The precipitate was filtered and dried to a constant weight to obtain 2.10 g of white solid. The conversion was 99 %. The number average molecular weight of polylactic acid *Mₙ* was 34,900. The polydispersity index PDI was 1.28.

### Example 7:

1,3-bis(2,4,6-trimethyl-phenyl)imidazoline-2-carboxylic acid salt (E) (32.6 mg, 75 µmol), benzene, ethanol (9.16 mg, 75 µmol), D-lactide (1.44 g, 10 mmol) were added into a reaction vessel. The reaction vessel was under vacuum at a pressure of 4 mm Hg. The reaction was carried out at 130 °C for 1 hour. The reaction was terminated by adding oxygen. The reaction mixture was dissolved in chloroform and then added into ethanol. The precipitate was filtered and dried to a constant weight to obtain 1.2 g of white solid. The conversion was 97 %. The number average molecular weight *Mₙ* of polylactic acid was 18,600. The polydispersity index PDI was 1.35.

### Example 8:

1,3-bis(2,4,6-trimethyl-phenyl)imidazole-2-carboxylic acid salt (B) (32.6 mg, 75 µmol), isopropanol (9.01 mg, 150 µmol), D-lactide (1.44 g, 10 mmol) were dissolved in 5 mL of *N,N-*dimethylformamide. The solution was heated under the protection of Ar to 96 °C and reacted for 12 hours. The reaction was terminated by adding water. The reaction solution was added into methanol. The precipitate was filtered and dried to a constant weight to obtain 1.32 g of white solid. The conversion was 92 %. The number average molecular weight of polylactic acid *Mₙ* was 8,580. The polydispersity index PDI was 1.11.

### Example 9:

1-butyl-3-methyl benzimidazol-2-carboxylic acid salt (M) (17.41 mg, 75 µmol), ethanol (1.73 mg, 37.5 µmol), D-lactide (8.64 g, 60 mmol) were dissolved in 100 mL of tetrahydrofuran. The solution was heated under the protection of Ar to 50 °C and reacted for 30 hours. The reaction was terminated by adding hydrochloric acid. The reaction solution was condensed and added into methanol. The precipitate was filtered and dried to a constant weight to obtain 6.20 g of white solid. The conversion was 76 %. The number average molecular weight of polylactic acid *Mₙ* was 188,750. The polydispersity index PDI was 1.38.

### Example 10:

1,3-bis(2-butyl)imidazole-2-carboxylic acid salt (I) (16.81 mg, 75 µmol), benzyl alcohol (10.8 mg, 100 µmol), D-lactide (1.44 g, 10 mmol) were added into a reaction vessel. The mixture was heated under the protection of Ar to 120 °C. The reaction was carried out in the molten mixture for 2 hours. The reaction was terminated by adding CS₂. The reaction mixture was dissolved in chloroform and the solution was then added into methanol. The precipitate was filtered and dried to a constant weight to obtain 1.15 g of white solid. The conversion was 97 %. The number average molecular weight of the polylactic acid *Mₙ* was 14,210. The polydispersity index PDI was 1.32.

### Example 11:

1,3-bis(o-methylphenyl)imidazole-2-carboxylic acid salt (G) (21.9 mg, 75 µmol), benzene, ethanol (12.21 mg, 100 µmol), L-lactide (1.44 g, 10 mmol) were added into a reaction vessel and heated under the protection of Ar to 250 °C. The reaction was carried out in the molten mixture for 20 min. The reaction was terminated by adding hydrochloric acid. The reaction mixture was dissolved in chloroform and added into ethanol. The precipitate was filtered and dried to a constant weight to obtain 1.1 g of white solid. The conversion was 89 %. The number average molecular weight of the polylactic acid *Mₙ* was 11,960. The polydispersity index was PDI 1.48.

### Example 12:

1,3-dicyclohexylimidazole-2-carboxylic acid salt (C) (27.62 mg, 100 µmol), tert-butanol (14.81 mg, 200 µmol), D, L-lactide (7.2 g, 50 mmol) were dissolved in 50 mL of toluene. The solution was heated under the protection of Ar to 100 °C and reacted for 30 minutes.The reaction was terminated by adding acetic acid. The reaction solution was added into methanol. The precipitate was filtered and dried to a constant weight to obtain 6.02 g of white solid. The conversion was 85 %. The number average molecular weight of polylactic acid *Mₙ* was 26,320. The polydispersity index PDI was 1.06.

### Example 13:

1,3-di-tert-butyl-imidazole-2-carboxylic acid salt (P) (6.72 mg, 30 µmol), benzyl alcohol (16.21 mg, 150 µmol), D, L-lactide (3.46 g, 24 mmol) were added into a reaction vessel and heated under the protection of Ar to 200 °C. The reaction was carried out in the molten mixture for 3 seconds. The reaction was terminated by adding oxygen. The reaction mixture was cooled and dissolved in toluene and added into ethanol. The precipitate was filtered and dried to a constant weight to obtain 2.5 g of white solid. The conversion was 76 %. The number average molecular weight of the polylactic acid *Mₙ* was 18,850. The polydispersity index PDI was 1.08.

### Example 14:

1,3-bis(methylphenyl)imidazole-2-carboxylic acid salt (H) (29.21 mg, 100 µmol), propanol (3.00 mg, 50 µmol), D-lactide (43.2 g, 0.3 mol) were dissolved in 1000 mL of DMSO. The solution was heated under the protection of Ar to 80 °C and reacted for 30 minutes. The reaction was terminated reaction by added CO₂. The reaction mixture was added into methanol. The precipitate was filtered and dried to a constant weight to obtain 39.2g of white solid. The conversion was 94 %. The number average molecular weight of polylactic acid *Mₙ* was 820. The polydispersity index PDI was 1.00.

### Example 15:

1-ethyl-3-methylimidazolium-2-carboxylic acid salt (F) (15.4 mg, 100 µmol), propanol (3.00 mg, 50 µmol), D-lactide (1.44 g, 10 mmol) were dissolved in 1 mL of DMSO. The solution was heated under the protection of Ar to 20 °C and reacted for 24 hours. The reaction was terminated by adding CO₂. The reaction mixture was added into methanol. The precipitate was filtered and dried to a constant weight to obtain 0.26 g of white solid. The conversion was 18 %. The number average molecular weight of the polylactic acid *Mₙ* was 8,750. The polydispersity index PDI was 1.08.

### Example 16:

1,3-bis(methylphenyl)imidazoline-2-carboxylic acid salt (K) (22.06 mg, 75 µmol), methanol (12 mg, 375 µmol), L-lactide (0.72 g, 5 mmol) were added into a reaction vessel and dissolved in 30 mL of tetrahydrofuran. The solution was heated under the protection of Ar to 40 °C, stirred and let react for 48 hours. The reaction was terminated by adding benzoic acid. The reactant was condensed and added into methanol. The precipitate was filtered and dried to a constant weight to obtain 0.39 g of white solid. The conversion was 54 %. The number average molecular weight of the polylactic acid *Mₙ* was 1,250. The polydispersity index PDI was 1.16.

### Example 17:

1,3-butyl-3,4-dichloro-imidazole-2-carboxylic acid salt (L) (29.21 mg, 100 µmol), butanol (7.41 mg, 100 µmol), D-lactide (5.76 g , 40 mmol) were added into a reaction vessel. The reaction vessel was under vacuum at a pressure of 7 mmHg. The reaction was carried out at 250 °C for 5 hours. The reaction was terminated by adding hydrochloric acid. The reaction mixture was dissolved in dichloromethane and then added into ethanol. The precipitate was filtered and dried to a constant weight to obtain 5.5 g of white solid. The conversion was 99 %. The number average molecular weight of the polylactic acid *Mₙ* was 48,780. The polydispersity index PDI was 1.48.

### Example 18:

1-tert-butyl-4,5-dichloro-2-carboxylic acid salt (R) (7.6 mg, 30 µmol), benzyl alcohol (16.21 mg, 150 µmol), D, L-lactide (3.46 g, 24 mmol) were added into a reaction vessel. The mixture was heated under the protection of Ar to 200 °C. The reaction was carried out in the molten mixture for 3 seconds. The reaction was terminated by adding oxygen. The reaction mixture was cooled and dissolved in toluene. The solution was added into ethanol. The precipitate was filtered and dried to a constant weight to obtain 2.5 g of white solid. The conversion was 80 %. The number average molecular weight of the polylactic acid *Mₙ* was 18,800. The polydispersity index PDI was 1.28.

### Example 19:

1-(1-phenylethyl)thiazole-2-carboxylic acid salt (S) (17.5 mg, 75 µmol), benzyl alcohol (10.8 mg, 100 µmol), D-lactide (1.44 g, 10 mmol) were added into a reaction vessel and heated under the protection Ar to 120 °C. The reaction was carried out in the molten mixture for 2 hours. The reaction was terminated by adding CS₂. The reactants were dissolved in chloroform and then added into methanol. The precipitate was filtered and dried to a constant weight to obtain 1.15 g of white solid. The conversion was 97 %. The number average molecular weight of the polylactic acid *Mₙ* was 13,210. The polydispersity index PDI was 1.32.

### Example 20:

2,4,5-triphenyl-1,2,4-triazole-3-carboxylic acid salt (T) (25.6 mg, 75 µmol), isopropanol (9.01 mg, 150 µmol), D-lactide (1.44 g, 10 mmol) were dissolved in 5 mL of *N,N*-dimethylformamide. The solution was heated under the protection of Ar to 96 °C and reacted for 12 hours. The reaction was terminated by adding water. The reaction solution was added into methanol. The precipitate was filtered and dried to a constant weight to obtain 1.32 g of white solid. The conversion was 92 %. The number average molecular weight of polylactic acid *Mₙ* was 8,560. The polydispersity index PDI was 1.11.

## Claims

1. A method of making polylactic acid using carbon dioxide adducts of carbenes, **characterized in that** the adducts of carbenes have a structure represented by formula (I): 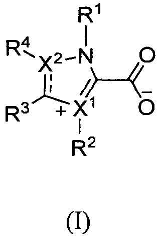 wherein the dotted line indicates an optional double bond;
X¹ is chosen from S and N;
X² is chosen from C and N;
R¹ and R² are the same or different and are chosen from
hydrogen,
alkyl groups having 1 to 10 carbon atoms,
alkyl groups having 1 to 10 carbon atoms and also having one or more substituents chosen from a halogen atom, a hydroxyl group, a phenyl group, and a cyano group,
cycloalkyl groups having 3 to 6 carbon atoms,
a halogen atom,
an adamantyl group,
a phenyl group, and
a phenyl group having one or more substituents chosen from a halogen atom, a hydroxyl group, an alkyl group, and a cyano group;
R³ and R⁴ are the same or different and are chosen from
hydrogen,
a halogen atom,
a cyano group,
a hydroxyl group,
alkyl groups having 1 to 4 carbon atoms,
alkyl groups having 1 to 4 carbon atoms and also having one or more substituents chosen from a halogen atom, a hydroxyl group, a phenyl group, and a cyano group,
a phenyl group, and
a substituted phenyl group, and
alternatively, R³ and R⁴ are connected to form cycloalkyl or cycloalkenyl rings having 3 to 8 carbon atoms; or
R³ and R⁴ are connected to form a benzene ring; or
R² and R³ are connected to form 5-or 6-*N*-heterocyclic compounds that do not have any substituent.

2. The method of claim 1, **characterized in that** the structure of carbon dioxide adducts of carbenes is represented by formula (II) 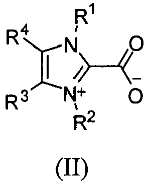
wherein R¹ and R² can be the same or different and are chosen from
hydrogen,
alkyl groups having 1 to 10 carbon atoms,
alkyl groups having 1 to 10 carbon atoms and also having one or more substituents chosen from a halogen atom, a hydroxyl group, a phenyl group, and a cyano group,
cycloalkyl groups having 3 to 6 carbon atoms,
a halogen atom,
an adamantyl group,
a phenyl group, and
a phenyl group having one or ore substituents chosen from a halogen atom, a hydroxyl group, an alkyl group, and a cyano group;
R³ and R⁴ can be the same or different and are chosen from
hydrogen,
a halogen atom,
a cyano group,
a hydroxyl group,
alkyl groups having 1 to 4 carbon atoms,
alkyl groups having 1 to 4 carbon atoms and also having one or more substituents chosen from a halogen atom, a hydroxyl group, a phenyl group, and a cyano group,
a phenyl group, and
a substituted phenyl group, and
alternatively, R³ and R⁴ are connected to form cycloalkyl or cycloalkenyl groups having 3 to 8 carbon atoms; or
R³ and R⁴ are connected to form a benzene ring.

3. The method of claim 1, **characterized in that** the structure of carbon dioxide adducts of carbenes is represented by formula (III) 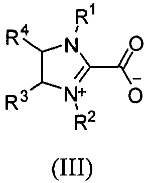
wherein R¹ and R² are the same or different and are chosen from
hydrogen,
alkyl groups having 1 to 10 carbon atoms,
alkyl groups having 1 to 10 carbon atoms and also having one or more substituents chosen from a halogen atom, a hydroxyl group, a phenyl group, and a cyano group,
cycloalkyl groups having 3 to 6 carbon atoms,
a halogen atom,
an adamantyl group,
a phenyl group, and
a phenyl group having one or more substituents chosen from a halogen atom, a hydroxyl group, an alkyl group, and a cyano group;
R³ and R⁴ can be the same or different and are chosen from
hydrogen,
a halogen atom,
a cyano group,
a hydroxyl group,
alkyl groups having 1 to 4 carbon atoms,
alkyl groups having 1 to 4 carbon atoms and also having one or more substituents chosen from a halogen atom, a hydroxyl group, a phenyl group, and a cyano group,
a phenyl group, and
a substituted phenyl group, and
alternatively, R³ and R⁴ are connected to form cycloalkyl groups having 3 to 8 carbon atoms.

4. The method of claim 1, **characterized in that** the structure of carbon dioxide adducts of carbenes is represented by formula (IV) 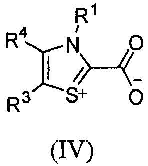
wherein R¹ is chosen from
hydrogen,
alkyl groups having 1 to 10 carbon atoms,
alkyl groups having 1 to 10 carbon atoms and also having one or more substituents chosen from a halogen atom, a hydroxyl group, a phenyl group, and a cyano group,
cycloalkyl groups having 3 to 6 carbon atoms,
a halogen atom,
an adamantyl group,
a phenyl group, and
a phenyl group having one or more substituents chosen from a halogen atom, a hydroxyl group, an alkyl group, and a cyano group;
R³ and R⁴ are the same or different and are chosen from
hydrogen,
a halogen atom,
a cyano group,
a hydroxyl group,
alkyl groups having 1 to 4 carbon atoms,
alkyl groups having 1 to 4 carbon atoms and also having one or more substituents chosen from a halogen atom, a hydroxyl group, a phenyl group, and a cyano group,
a phenyl group, and
a substituted phenyl group, and
alternatively, R³ and R⁴ are connected to form cycloalkenyl groups having 3 to 8 carbon atoms;
or
R³ and R⁴ are connected to form a benzene ring.

5. The method of claim 1, **characterized in that** the structure of the carbon dioxide adducts of carbenes is represented by formula (V) 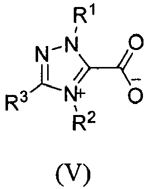 wherein
R¹ and R² are the same or different and are chosen from
hydrogen,
alkyl groups having 1 to 10 carbon atoms,
alkyl groups having 1 to 10 carbon atoms and also having one or more substituents chosen from a halogen atom, a hydroxyl group, a phenyl group, and a cyano group,
cycloalkyl groups having 3 to 6 carbon atoms,
a halogen atom,
an adamantyl group,
a phenyl group, and
a phenyl group having one or more substituents chosen from a halogen atom, a hydroxyl group, an alkyl group, and a cyano group;
R³ is chosen from
hydrogen,
a halogen atom,
a cyano group,
a hydroxyl group,
alkyl groups having 1 to 4 carbon atoms,
alkyl groups having 1 to 4 carbon atoms and also having one or more substituents chosen from a halogen atom, a hydroxyl group, a phenyl group, and a cyano group,
a phenyl group, and
a substituted phenyl group, and
alternatively, R² and R³ are connected to form 5- or 6-N- heterocyclics that do not have any substituent.

6. The method of any one of claims 1 to 5, wherein the substituted phenyl group has one, two, or three substituents, wherein the substituents are the same or different, chosen from a halogen atom, a hydroxyl group, an alkoxy group, and a cyano group, alkyl groups having 1-5 carbon atoms, and alkyl groups having 1-5 carbon atoms with one or more substituents chosen from halogen atoms, a hydroxyl group, a phenyl group, and a cyano group.

7. The method of any one of claims 1 to 5, wherein the method is a method of solution polymerization and wherein the carbon dioxide adduct of carbene, the initiator, and the lactide monomer have a molar ratio of 1:0.2 to 5:2 to 10000 in an organic solvent.

8. The method of any one of claims 1 to 5, wherein the method is a method of solution polymerization and wherein the reaction temperature ranges from -50 °C to 250 °C.

9. The method of claim 7, wherein the initiator is an alcohol chosen from methanol, ethanol, propanol, isopropanol, n-butanol, tert-butyl alcohol, benzyl alcohol, ethylene glycol, diethylene glycol, pentaerythritol, and phenethyl alcohol.

10. The method of claim 7, wherein the organic solvent is chosen from cyclohexane, hexane, ethyl ether, acetone, cyclohexanone, dioxane, tetrahydrofuran, benzene, toluene, xylene, methylene chloride, chloroform, *N,N*-dimethylformamide, *N,N*-dimethylacetamide and dimethyl sulfoxide.

11. The method of claim 7, wherein the lactide has an initial concentration ranging from 0.01 mol/L to 10 mol/L.

12. The method of claim 7, wherein a weak acid is added to terminate the reaction, such as formic acid, acetic acid, hydrochloric acid, oxygen, water, CS₂, or CO₂, preferably by adding formic acid, acetic acid, water, or CS₂.

13. The method of claim 7, wherein the method further comprises the step of purifying a reaction product in an antisolvent, such as methanol, ethanol, or water.

14. The method of any one of claims 1 to 5, wherein the method is a bulk polymerization.

15. The method of claim 14, wherein the method further comprises purifying the reaction product, after it is dissolved in a good solvent, in an antisolvent, such as methanol, ethanol, or water, wherein the good solvent is dichloromethane, chloroform, toluene, benzene, acetone, or tetrahydrofuran, preferably dichloromethane, chloroform, or tetrahydrofuran.

## Patentansprüche

1. Verfahren zur Herstellung von Polymilchsäure mittels Kohlendioxidaddukten von Carbenen, **dadurch gekennzeichnet, dass** die Addukte von Carbenen eine Struktur aufweisen, die durch die Formel (I) dargestellt ist: 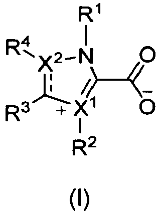 wobei die gestrichelte Linie eine optionale Doppelbindung angibt;
X¹ aus S und N ausgewählt ist;
X² aus C und N ausgewählt ist;
R¹ und R² identisch oder verschieden sind und ausgewählt sind aus
Wasserstoff,
Alkylgruppen mit 1 bis 10 Kohlenstoffatomen,
Alkylgruppen mit 1 bis 10 Kohlenstoffatomen, die auch einen oder mehrere Substituenten aufweisen, der oder die aus einem Halogenatom, einer Hydroxylgruppe, einer Phenylgruppe und einer Cyanogruppe ausgewählt ist oder sind,
Cycloalkylgruppen mit 3 bis 6 Kohlenstoffatomen,
einem Halogenatom,
einer Adamantylgruppe,
einer Phenylgruppe und
einer Phenylgruppe, die einen oder mehrere Substituenten aufweist, der oder die aus einem Halogenatom, einer Hydroxylgruppe, einer Alkylgruppe und einer Cyanogruppe ausgewählt ist oder sind;
R³ und R⁴ identisch oder verschieden sind und ausgewählt sind aus
Wasserstoff,
einem Halogenatom,
einer Cyanogruppe,
einer Hydroxylgruppe,
Alkylgruppen mit 1 bis 4 Kohlenstoffatomen,
Alkylgruppen mit 1 bis 4 Kohlenstoffatomen, die auch einen oder mehrere Substituenten aufweisen, der oder die aus einem Halogenatom, einer Hydroxylgruppe, einer Phenylgruppe und einer Cyanogruppe ausgewählt ist oder sind,
einer Phenylgruppe und
einer substituierten Phenylgruppe und
alternativ sind R³ und R⁴ unter Bildung eines Cycloalkyl- oder Cycloalkenylrings mit 3 bis 8 Kohlenstoffatomen verbunden; oder
R³ und R⁴ sind unter Bildung eines Benzolrings verbunden; oder
R² und R³ sind unter Bildung von 5- oder 6-*N*-heterocyclischen Verbindungen verbunden, die keinen Substituenten aufweisen.

2. Verfahren nach Anspruch 1, **dadurch gekennzeichnet, dass** die Struktur von Kohlendioxidaddukten von Carbenen durch die Formel (II) dargestellt ist 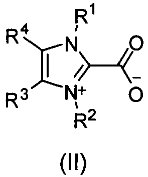
wobei R¹ und R² identisch oder verschieden sein können und ausgewählt sind aus
Wasserstoff,
Alkylgruppen mit 1 bis 10 Kohlenstoffatomen,
Alkylgruppen mit 1 bis 10 Kohlenstoffatomen, die auch einen oder mehrere Substituenten aufweisen, der oder die aus einem Halogenatom, einer Hydroxylgruppe, einer Phenylgruppe und einer Cyanogruppe ausgewählt ist oder sind,
Cycloalkylgruppen mit 3 bis 6 Kohlenstoffatomen,
einem Halogenatom,
einer Adamantylgruppe,
einer Phenylgruppe und
einer Phenylgruppe, die einen oder mehrere Substituenten aufweist, der oder die aus einem Halogenatom, einer Hydroxylgruppe, einer Alkylgruppe und einer Cyanogruppe ausgewählt ist oder sind;
R³ und R⁴ identisch oder verschieden sein können und ausgewählt sind aus
Wasserstoff,
einem Halogenatom,
einer Cyanogruppe,
einer Hydroxylgruppe,
Alkylgruppen mit 1 bis 4 Kohlenstoffatomen,
Alkylgruppen mit 1 bis 4 Kohlenstoffatomen, die auch einen oder mehrere Substituenten aufweisen, der oder die aus einem Halogenatom, einer Hydroxylgruppe, einer Phenylgruppe und einer Cyanogruppe ausgewählt ist oder sind,
einer Phenylgruppe und
einer substituierten Phenylgruppe und
alternativ R³ und R⁴ unter Bildung von Cycloalkyl- oder Cycloalkenylgruppen mit 3 bis 8 Kohlenstoffatomen verbunden sind; oder
R³ und R⁴ unter Bildung eines Benzolrings verbunden sind.

3. Verfahren nach Anspruch 1, **dadurch gekennzeichnet, dass** die Struktur von Kohlendioxidaddukten von Carbenen durch die Formel (III) dargestellt ist 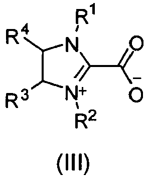
wobei R¹ und R² identisch oder verschieden sind und ausgewählt sind aus
Wasserstoff,
Alkylgruppen mit 1 bis 10 Kohlenstoffatomen,
Alkylgruppen mit 1 bis 10 Kohlenstoffatomen, die auch einen oder mehrere Substituenten aufweisen, der oder die aus einem Halogenatom, einer Hydroxylgruppe, einer Phenylgruppe und einer Cyanogruppe ausgewählt ist oder sind,
Cycloalkylgruppen mit 3 bis 6 Kohlenstoffatomen,
einem Halogenatom,
einer Adamantylgruppe,
einer Phenylgruppe und
einer Phenylgruppe, die einen oder mehrere Substituenten aufweist, der oder die aus einem Halogenatom, einer Hydroxylgruppe, einer Alkylgruppe und einer Cyanogruppe ausgewählt ist oder sind;
R³ und R⁴ identisch oder verschieden sein können und ausgewählt sind aus
Wasserstoff,
einem Halogenatom,
einer Cyanogruppe,
einer Hydroxylgruppe,
Alkylgruppen mit 1 bis 4 Kohlenstoffatomen,
Alkylgruppen mit 1 bis 4 Kohlenstoffatomen, die auch einen oder mehrere Substituenten aufweisen, der oder die aus einem Halogenatom, einer Hydroxylgruppe, einer Phenylgruppe und einer Cyanogruppe ausgewählt ist oder sind,
einer Phenylgruppe und
einer substituierten Phenylgruppe und
alternativ R³ und R⁴ unter Bildung von Cycloalkylgruppen mit 3 bis 8 Kohlenstoffatomen verbunden sind.

4. Verfahren nach Anspruch 1, **dadurch gekennzeichnet, dass** die Struktur von Kohlendioxidaddukten von Carbenen durch die Formel (IV) dargestellt ist 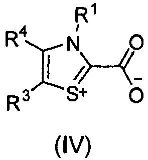
wobei R¹ ausgewählt ist aus
Wasserstoff,
Alkylgruppen mit 1 bis 10 Kohlenstoffatomen,
Alkylgruppen mit 1 bis 10 Kohlenstoffatomen, die auch einen oder mehrere Substituenten aufweisen, der oder die aus einem Halogenatom, einer Hydroxylgruppe, einer Phenylgruppe und einer Cyanogruppe ausgewählt ist oder sind,
Cycloalkylgruppen mit 3 bis 6 Kohlenstoffatomen,
einem Halogenatom,
einer Adamantylgruppe,
einer Phenylgruppe und
einer Phenylgruppe, die einen oder mehrere Substituenten aufweist, der oder die aus einem Halogenatom, einer Hydroxylgruppe, einer Alkylgruppe und einer Cyanogruppe ausgewählt ist oder sind;
R³ und R⁴ identisch oder verschieden sind und ausgewählt sind aus
Wasserstoff,
einem Halogenatom,
einer Cyanogruppe,
einer Hydroxylgruppe,
Alkylgruppen mit 1 bis 4 Kohlenstoffatomen,
Alkylgruppen mit 1 bis 4 Kohlenstoffatomen, die auch einen oder mehrere Substituenten aufweisen, der oder die aus einem Halogenatom, einer Hydroxylgruppe, einer Phenylgruppe und einer Cyanogruppe ausgewählt ist oder sind,
einer Phenylgruppe und
einer substituierten Phenylgruppe und
alternativ R³ und R⁴ unter Bildung von Cycloalkenylgruppen mit 3 bis 8 Kohlenstoffatomen verbunden sind; oder
R³ und R⁴ unter Bildung eines Benzolrings verbunden sind.

5. Verfahren nach Anspruch 1, **dadurch gekennzeichnet, dass** die Struktur der Kohlendioxidaddukte von Carbenen durch die Formel (V) dargestellt ist 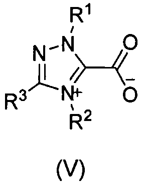 wobei
R¹ und R² identisch oder verschieden sind und ausgewählt sind aus
Wasserstoff,
Alkylgruppen mit 1 bis 10 Kohlenstoffatomen,
Alkylgruppen mit 1 bis 10 Kohlenstoffatomen, die auch einen oder mehrere Substituenten aufweisen, der oder die aus einem Halogenatom, einer Hydroxylgruppe, einer Phenylgruppe und einer Cyanogruppe ausgewählt ist oder sind,
Cycloalkylgruppen mit 3 bis 6 Kohlenstoffatomen,
einem Halogenatom,
einer Adamantylgruppe,
einer Phenylgruppe und
einer Phenylgruppe, die einen oder mehrere Substituenten aufweist, der oder die aus einem Halogenatom, einer Hydroxylgruppe, einer Alkylgruppe und einer Cyanogruppe ausgewählt ist oder sind;
R³ ausgewählt ist aus
Wasserstoff,
einem Halogenatom,
einer Cyanogruppe,
einer Hydroxylgruppe,
Alkylgruppen mit 1 bis 4 Kohlenstoffatomen,
Alkylgruppen mit 1 bis 4 Kohlenstoffatomen, die auch einen oder mehrere Substituenten aufweisen, der oder die aus einem Halogenatom, einer Hydroxylgruppe, einer Phenylgruppe und einer Cyanogruppe ausgewählt ist oder sind,
einer Phenylgruppe und
einer substituierten Phenylgruppe und
alternativ R² und R³ unter Bildung von 5- oder 6-*N*-Heterocyclen, die keinen Substituenten aufweisen, verbunden sind.

6. Verfahren nach einem der Ansprüche 1 bis 5, bei dem die substituierte Phenylgruppe einen, zwei oder drei Substituenten aufweist, wobei die Substituenten identisch oder verschieden sind und aus einem Halogenatom, einer Hydroxylgruppe, einer Alkoxygruppe und einer Cyanogruppe, Alkylgruppen mit 1 bis 5 Kohlenstoffatomen und Alkylgruppen mit 1 bis 5 Kohlenstoffatomen mit einem oder mehreren Sustituenten, ausgewählt aus Halogenatomen, einer Hydroxylgruppe, einer Phenylgruppe und einer Cyanogruppe, ausgewählt sind.

7. Verfahren nach einem der Ansprüche 1 bis 5, wobei das Verfahren ein Lösungspolymerisationsverfahren ist und bei dem das Kohlendioxidaddukt eines Carbens, der Initiator und das Lactidmonomer ein molares Verhältnis von 1:0,2 bis 5:2 bis 10000 in einem organischen Lösungsmittel aufweisen.

8. Verfahren nach einem der Ansprüche 1 bis 5, wobei das Verfahren ein Lösungspolymerisationsverfahren ist und bei dem die Reaktionstemperatur im Bereich von -50 °C bis 250 °C liegt.

9. Verfahren nach Anspruch 7, bei dem das organische Lösungsmittel aus Methanol, Ethanol, Propanol, Isopropanol, n-Butanol, tert-Butylalkohol, Benzylalkohol, Ethylenglykol, Diethylenglykol, Pentaerythrit und Phenethylalkohol ausgewählt ist.

10. Verfahren nach Anspruch 7, bei dem das organische Lösungsmittel aus Cyclohexan, Hexan, Ethylether, Aceton, Cyclohexanon, Dioxan, Tetrahydrofuran, Benzol, Toluol, Xylol, Methylenchlorid, Chloroform, *N,N*-Dimethylformamid, *N,N*-Dimethylacetamid und Dimethylsulfoxid ausgewählt ist.

11. Verfahren nach Anspruch 7, bei dem das Lactid eine anfängliche Konzentration im Bereich von 0,01 mol/L bis 10 mol/L aufweist.

12. Verfahren nach Anspruch 7, bei dem eine schwache Säure zum Beenden der Reaktion zugesetzt wird, wie z.B. Ameisensäure, Essigsäure, Chlorwasserstoffsäure, Sauerstoff, Wasser, CS₂ oder CO₂, wobei vorzugsweise Ameisensäure, Essigsäure, Wasser oder CS₂ zugesetzt wird.

13. Verfahren nach Anspruch 7, wobei das Verfahren ferner den Schritt des Reinigens eines Reaktionsprodukts in einem Antilösungsmittel, wie z.B. Methanol, Ethanol oder Wasser, umfasst.

14. Verfahren nach einem der Ansprüche 1 bis 5, wobei das Verfahren eine Massepolymerisation ist.

15. Verfahren nach Anspruch 14, wobei das Verfahren ferner das Reinigen des Reaktionsprodukts, nachdem es in einem guten Lösungsmittel gelöst worden ist, in einem Antilösungsmittel, wie z.B. Methanol, Ethanol oder Wasser, umfasst, wobei das gute Lösungsmittel Dichlormethan, Chloroform, Toluol, Benzol, Aceton oder Tetrahydrofuran, vorzugsweise Dichlormethan, Chloroform oder Tetrahydrofuran ist.

## Revendications

1. Procédé de préparation d'un polyacide lactique en utilisant des adduits de carbènes avec le dioxyde de carbone, **caractérisé en ce que** les adduits de carbènes possèdent une structure représentée par la formule (I) : 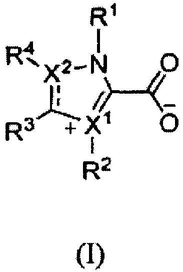 dans laquelle la ligne pointillée indique une double liaison facultative ;
X¹ est choisi parmi S et N ;
X² est choisi parmi C et N ;
R¹ et R² sont identiques ou différents et sont choisis parmi
un hydrogène,
les groupes alkyle contenant 1 à 10 atomes de carbone,
les groupes alkyle contenant 1 à 10 atomes de carbone et contenant également un ou plusieurs substituants choisis parmi un atome d'halogène, un groupe hydroxyle, un groupe phényle, et un groupe cyano,
les groupes cycloalkyle contenant 3 à 6 atomes de carbone,
un atome d'halogène,
un groupe adamantyle,
un groupe phényle, et
un groupe phényle contenant un ou plusieurs substituants choisis parmi un atome d'halogène, un groupe hydroxyle, un groupe alkyle, et un groupe cyano ;
R³ et R⁴ sont identiques ou différents et sont choisis parmi
un hydrogène,
un atome d'halogène,
un groupe cyano,
un groupe hydroxyle,
les groupes alkyle contenant 1 à 4 atomes de carbone,
les groupes alkyle contenant 1 à 4 atomes de carbone et contenant également un ou plusieurs substituants choisis parmi un atome d'halogène, un groupe hydroxyle, un groupe phényle, et un groupe cyano,
un groupe phényle, et
un groupe phényle substitué, et
en variante, R³ et R⁴ sont reliés pour former des cycles cycloalkyle ou cycloalcényle contenant 3 à 8 atomes de carbone ; ou
R³ et R⁴ sont reliés pour former un cycle benzène ; ou
R² et R³ sont reliés pour former des composés 5- ou 6-N-hétérocyclique qui ne contiennent aucun substituant.

2. Procédé selon la revendication 1, **caractérisé en ce que** la structure des adduits de carbènes avec le dioxyde de carbone est représentée par la formule (II) 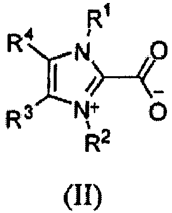
dans laquelle R¹ et R² peuvent être identiques ou différents et sont choisis parmi
un hydrogène,
les groupes alkyle contenant 1 à 10 atomes de carbone,
les groupes alkyle contenant 1 à 10 atomes de carbone et contenant également un ou plusieurs substituants choisis parmi un atome d'halogène, un groupe hydroxyle, un groupe phényle, et un groupe cyano,
les groupes cycloalkyle contenant 3 à 6 atomes de carbone,
un atome d'halogène,
un groupe adamantyle,
un groupe phényle, et
un groupe phényle contenant un ou plusieurs substituants choisis parmi un atome d'halogène, un groupe hydroxyle, un groupe alkyle, et un groupe cyano ;
R³ et R⁴ peuvent être identiques ou différents et sont choisis parmi
un hydrogène,
un atome d'halogène,
un groupe cyano,
un groupe hydroxyle,
les groupes alkyle contenant 1 à 4 atomes de carbone,
les groupes alkyle contenant 1 à 4 atomes de carbone et contenant également un ou plusieurs substituants choisis parmi un atome d'halogène, un groupe hydroxyle, un groupe phényle, et un groupe cyano,
un groupe phényle, et
un groupe phényle substitué, et
en variante, R³ et R⁴ sont reliés pour former des groupes cycloalkyle ou cycloalcényle contenant 3 à 8 atomes de carbone ; ou
R³ et R⁴ sont reliés pour former un cycle benzène.

3. Procédé selon la revendication 1, **caractérisé en ce que** la structure des adduits de carbènes avec le dioxyde de carbone est représentée par la formule (III) 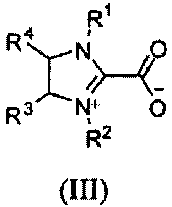
dans laquelle R¹ et R² sont identiques ou différents et sont choisis parmi
un hydrogène,
les groupes alkyle contenant 1 à 10 atomes de carbone,
les groupes alkyle contenant 1 à 10 atomes de carbone et contenant également un ou plusieurs substituants choisis parmi un atome d'halogène, un groupe hydroxyle, un groupe phényle, et un groupe cyano,
les groupes cycloalkyle contenant 3 à 6 atomes de carbone,
un atome d'halogène,
un groupe adamantyle,
un groupe phényle, et
un groupe phényle contenant un ou plusieurs substituants choisis parmi un atome d'halogène, un groupe hydroxyle, un groupe alkyle, et un groupe cyano ;
R³ et R⁴ peuvent être identiques ou différents et sont choisis parmi
un hydrogène,
un atome d'halogène,
un groupe cyano,
un groupe hydroxyle,
les groupes alkyle contenant 1 à 4 atomes de carbone,
les groupes alkyle contenant 1 à 4 atomes de carbone et contenant également un ou plusieurs substituants choisis parmi un atome d'halogène, un groupe hydroxyle, un groupe phényle, et un groupe cyano,
un groupe phényle, et
un groupe phényle substitué, et
en variante, R³ et R⁴ sont reliés pour former des groupes cycloalkyle contenant 3 à 8 atomes de carbone.

4. Procédé selon la revendication 1, **caractérisé en ce que** la structure des adduits de carbènes avec le dioxyde de carbone est représentée par la formule (IV) 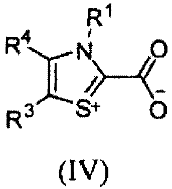
dans laquelle R¹ est choisi parmi
un hydrogène,
les groupes alkyle contenant 1 à 10 atomes de carbone,
les groupes alkyle contenant 1 à 10 atomes de carbone et contenant également un ou plusieurs substituants choisis parmi un atome d'halogène, un groupe hydroxyle, un groupe phényle, et un groupe cyano,
les groupes cycloalkyle contenant 3 à 6 atomes de carbone,
un atome d'halogène,
un groupe adamantyle,
un groupe phényle, et
un groupe phényle contenant un ou plusieurs substituants choisis parmi un atome d'halogène, un groupe hydroxyle, un groupe alkyle, et un groupe cyano ;
R³ et R⁴ sont identiques ou différents et sont choisis parmi
un hydrogène,
un atome d'halogène,
un groupe cyano,
un groupe hydroxyle,
les groupes alkyle contenant 1 à 4 atomes de carbone,
les groupes alkyle contenant 1 à 4 atomes de carbone et contenant également un ou plusieurs substituants choisis parmi un atome d'halogène, un groupe hydroxyle, un groupe phényle, et un groupe cyano,
un groupe phényle, et
un groupe phényle substitué, et
en variante, R³ et R⁴ sont reliés pour former des groupes cycloalcényle contenant 3 à 8 atomes de carbone ;
ou
R³ et R⁴ sont reliés pour former un cycle benzène.

5. Procédé selon la revendication 1, **caractérisé en ce que** la structure des adduits de carbènes avec le dioxyde de carbone est représentée par la formule (V) 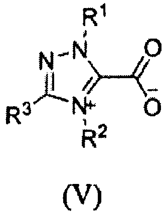 dans laquelle
R¹ et R² sont identiques ou différents et sont choisis parmi
un hydrogène,
les groupes alkyle contenant 1 à 10 atomes de carbone,
les groupes alkyle contenant 1 à 10 atomes de carbone et contenant également un ou plusieurs substituants choisis parmi un atome d'halogène, un groupe hydroxyle, un groupe phényle, et un groupe cyano,
les groupes cycloalkyle contenant 3 à 6 atomes de carbone,
un atome d'halogène,
un groupe adamantyle,
un groupe phényle, et
un groupe phényle contenant un ou plusieurs substituants choisis parmi un atome d'halogène, un groupe hydroxyle, un groupe alkyle, et un groupe cyano ;
R³ est choisi parmi
un hydrogène,
un atome d'halogène,
un groupe cyano,
un groupe hydroxyle,
les groupes alkyle contenant 1 à 4 atomes de carbone,
les groupes alkyle contenant 1 à 4 atomes de carbone et contenant également un ou plusieurs substituants choisis parmi un atome d'halogène, un groupe hydroxyle, un groupe phényle, et un groupe cyano,
un groupe phényle, et
un groupe phényle substitué, et
en variante, R² et R³ sont reliés pour former des 5- ou 6-N-hétérocycles qui ne contiennent aucun substituant.

6. Procédé selon l'une quelconque des revendications 1 à 5, dans lequel le groupe phényle substitué contient un, deux, ou trois substituants, dans lequel les substituants sont identiques ou différents, choisis parmi un atome d'halogène, un groupe hydroxyle, un groupe alcoxy, et un groupe cyano, les groupes alkyle contenant 1 à 5 atomes de carbone, et les groupes alkyle contenant 1 à 5 atomes de carbone avec un ou plusieurs substituants choisis parmi les atomes d'halogène, un groupe hydroxyle, un groupe phényle, et un groupe cyano.

7. Procédé selon l'une quelconque des revendications 1 à 5, dans lequel le procédé est un procédé de polymérisation en solution et dans lequel l'adduit de carbène avec le dioxyde de carbone, l'initiateur, et le monomère lactide présentent un rapport molaire de 1 : 0,2 à 5 : 2 à 10 000 dans un solvant organique.

8. Procédé selon l'une quelconque des revendications 1 à 5, dans lequel le procédé est un procédé de polymérisation en solution et dans lequel la température réactionnelle est située dans une plage allant de -50 °C à 250 °C.

9. Procédé selon la revendication 7, dans lequel l'initiateur est un alcool choisi parmi le méthanol, l'éthanol, le propanol, l'isopropanol, le n-butanol, l'alcool tert-butylique, l'alcool benzylique, l'éthylène glycol, le diéthylène glycol, le pentaérythritol, et l'alcool phénéthylique.

10. Procédé selon la revendication 7, dans lequel le solvant organique est choisi parmi le cyclohexane, l'hexane, l'éthyl éther, l'acétone, la cyclohexanone, le dioxane, le tétrahydrofurane, le benzène, le toluène, le xylène, le chlorure de méthylène, le chloroforme, le N,N-diméthylformamide, le N,N-diméthylacétamide et le diméthyl sulfoxyde.

11. Procédé selon la revendication 7, dans lequel le lactide présente une concentration initiale située dans une plage allant de 0,01 mole/l à 10 moles/l.

12. Procédé selon la revendication 7, dans lequel un acide faible est ajouté pour terminer la réaction, tel que l'acide formique, l'acide acétique, l'acide chlorhydrique, l'oxygène, l'eau, le CS₂, ou le CO₂, de préférence par l'ajout d'acide formique, d'acide acétique, d'eau ou de CS2.

13. Procédé selon la revendication 7, dans lequel le procédé comprend en outre l'étape de purification d'un produit réactionnel dans un antisolvant, tel que le méthanol, l'éthanol, ou l'eau.

14. Procédé selon l'une quelconque des revendications 1 à 5, dans lequel le procédé est une polymérisation en masse.

15. Procédé selon la revendication 14, dans lequel le procédé comprend en outre la purification du produit réactionnel, après sa dissolution dans un bon solvant, dans un antisolvant, tel que le méthanol, l'éthanol, ou l'eau, dans lequel le bon solvant est le dichlorométhane, le chloroforme, le toluène, le benzène, l'acétone, ou le tétrahydrofurane, de préférence le dichlorométhane, le chloroforme, ou le tétrahydrofurane.
